(19) Europäisches Patentamt

European Patent Office

Office européen des brevets

(11) EP 0 864 846 A2

## (12) EUROPEAN PATENT APPLICATION

(43) Date of publication:
16.09.1998 Bulletin 1998/38

(51) Int. Cl.$^6$: G01B 7/34, G02B 21/00

(21) Application number: 98102250.2

(22) Date of filing: 10.02.1998

(84) Designated Contracting States:
AT BE CH DE DK ES FI FR GB GR IE IT LI LU MC NL PT SE
Designated Extension States:
AL LT LV MK RO SI

(30) Priority: 12.03.1997 EP 97301658

(71) Applicant: Karrai-Haines GbR
80336 München (DE)

(72) Inventors:
• Karrai, Khaled
80336 München (DE)
• Manus, Stephan
81479 München (DE)

(74) Representative:
Lange, Thomas, Dr.
Patentanwälte,
Dr. Graf Lambsdorff und Dr. Lange,
Zentnerstrasse 17
80798 München (DE)

### (54) Scanning probe microscope

(57) A head for a scanning probe microscope comprising a tuning fork (30) with an SPM tip (34) attached to one prong of the tuning fork. An AC signal (Vin) generated by oscillation of the tuning fork is supplied by a pair of electrodes on the tuning fork to input terminals (10 and 12) of a source-follower circuit comprising a dual-gate GaAs-MESFET (14), the gates (G1, G2) of which are connected in parallel to one of the pick-up electrodes via one of the input terminals (10), the other of the pick-up electrodes being earthed via the other of the input terminals (12). The signal (Vin) is processed by the circuit and supplied to two output terminals (26 and 28) as an output signal (Vout). The megaohm output impedance of the tuning fork is thus translated into an output impedance of the order of a hundred ohms, thus improving signal transfer efficiency from the head to an external signal amplifier.

Fig.2

EP 0 864 846 A2

## Description

The invention relates to a head for a scanning probe microscope and to a scanning probe microscope having such a head.

There are various kinds of scanning probe microscope (SPM) including the scanning tunnelling microscope (STM), the atomic force microscope (AFM) and the near-field scanning optical microscope (NSOM).

An SPM comprising a piezoelectric oscillator connected to the SPM tip is known, for example in US4851671 and GB-A-2289759. An SPM of this kind is operative in differential or AC collection mode in which the piezoelectric oscillator is set into resonant oscillation to output a tip-sample interaction dependent AC signal from pick-up electrodes arranged on the oscillator. The AC signal is supplied via a cable to the input of a lock-in amplifier and then on to further signal processing electronics where an image of the sample is formed based on the variations in the AC signal caused by interaction between the tip and a sample under study.

NSOM tuning fork embodiments of the SPM disclosed in GB-A-2289759 have proven popular. For AFMs however it has been generally preferred for some years now to use a cantilever arrangement in which the deflection of the cantilever is measured optically, for example by laser beam deflection or optical interferometry. With such optical detection of cantilever deflection, deflections in the Angstrom to picometre range are measurable. An example of an optical cantilever AFM is disclosed in EP-A-0394962.

According to a first aspect of the invention there is provided a head for a scanning probe microscope, the head comprising: a tip for interacting with a sample; a piezoelectric element connected to the tip and having an electrode for picking up an electrical signal generated by oscillation of the piezoelectric element and influenced by external forces acting on the tip; and a circuit for receiving the signal from the pick-up electrode of the piezoelectric element as input, processing the input signal and delivering it from the head as an output signal for a signal amplifier, wherein the circuit comprises a field effect transistor arranged in the circuit in a source-follower configuration a gate of which is connected to the pick-up electrode to receive the input signal.

According to a second aspect of the invention there is provided a scanning probe microscope comprising a head according to the first aspect of the invention.

With preferred embodiments of the invention it is possible to improve the efficiency with which the signal is transferred from the piezoelectric element of the SPM head to a signal amplifier constituting the front end of the signal processing circuitry used in conventional SPMs. Embodiments of the invention already built and tested show an improvement in output signal of the order of 30 to 100 times for a typical SPM arrangement, as compared to the output signal obtained when the AC signal generated by oscillation of the same piezoelectric element is supplied directly to the signal amplifier.

As a result of the improved signal transfer efficiency, it is possible to adjust the forced driving oscillation of the piezoelectric element to reduce the magnitude of the movement of the tip induced by the oscillation. This allows the tip excursion to be reduced from the nanometre scale, typically necessary for good performance when the AC signal is supplied directly to the signal amplifier, to the Angstrom or picometre scale. This reduction is of immense practical importance since the one to two orders of magnitude improvement achievable can represent the difference between being able to achieve atomic resolution and not, atomic separation in a solid or molecule being of the order of a few Angstrom. In preferred embodiments of the invention a tuning fork is used as the piezoelectric element and it is possible to provide a tuning fork based AFM having an overall performance comparable with that of an optical cantilever based AFM.

A further advantage is that signal losses in cabling connecting the SPM head to a signal amplifier can be substantially reduced or eliminated. This is of particular benefit to SPMs in which it is not possible to position the SPM head and the signal amplifier close together. Such remote location of the signal amplifier can for example be necessary if the SPM head is disposed in a cryostat or vacuum chamber for measurement of a sample at low temperature or under vacuum respectively, such conditions being common for many SPM measurements, most especially STM measurements.

For low-temperature applications, for example when the head is operable at 4.2 Kelvin, the field effect transistor is in a preferred embodiment a MESFET, such as a GaAs-MESFET or other III-V compound MESFET. The MESFET may be an n-channel MESFET. The MESFET may have two or more gate connected together, for example the MESFET may be a dual-gate MESFET. For room temperature applications, a MESFET may also be used. Alternatively, the field effect transistor may be a JFET, such as a Si-JFET.

The field effect transistor is preferably operable with a relatively low bias voltage, such as 4 volts, 3 volts or 2 volts. The head preferably has a relatively low output impedance, such as less than 1000, 500 or 200 ohms.

For a better understanding of the invention, and to show how the same may be carried into effect, reference is made in the following by way of example to the drawings in which:

Figure 1 shows a circuit diagram according to a first embodiment;

Figure 2 shows a perspective view of a head for a scanning probe microscope according to the first embodiment;

Figure 3 shows in plan view the circuit board tracks of a circuit board for implementing the circuit of Figure 1;

Figure 4 shows a circuit diagram according to a second embodiment;

Figure 5 is a component table for two examples 1A and 1B of the circuit of the first embodiment and three examples 2A, 2B and 2C of the circuit of the second embodiment;

Figure 6 shows a schematic view of an atomic force microscope (AFM) incorporating a head according to the first or second embodiment;

Figure 7 shows a schematic view of another atomic force microscope (AFM) incorporating a head according to the first or second embodiment;

Figure 8 shows a schematic view of a near-field scanning optical microscope (NSOM) incorporating a head according to the first or second embodiment;

Figure 9 shows a schematic view of another near-field scanning optical microscope (NSOM) incorporating a head according to the first or second embodiment;

Figure 10 is a graph showing the results of an experiment performed to compare the signal delivered by an SPM head according to Example 1A of the first embodiment (upper curve) and the signal delivered by a corresponding tuning fork based SPM head without the circuit of Figure 1 (lower curve);

Figure 11 shows the signal-to-noise ratio in arbitrary units as a function of bias voltage VDD of an NSOM head having the circuit of Example 1A and a 33kHz tuning fork;

Figure 12 shows the voltage amplification $A_V$ (gain) as a function of drain-source voltage VDS for the five examples of Figure 5;

Figure 13 shows the input capacitance Ce as a function of drain-source voltage VDS for the five examples of Figure 5;

Figure 14 shows the output voltage noise in $nV/(Hz)^{1/2}$ as a function of drain-source voltage VDS for examples 1A, 1B, 2A and 2B of Figure 5 with 100kHz tuning forks; and

Figure 15 shows the output voltage noise $nV/(Hz)^{1/2}$ as a function of drain-source voltage VDS for examples 1B, 2B and 2C of Figure 5 with 33kHz tuning forks.

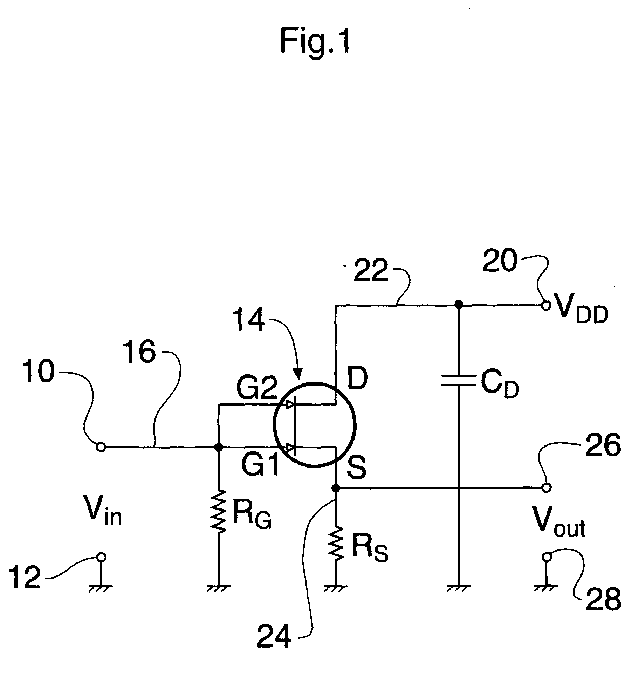

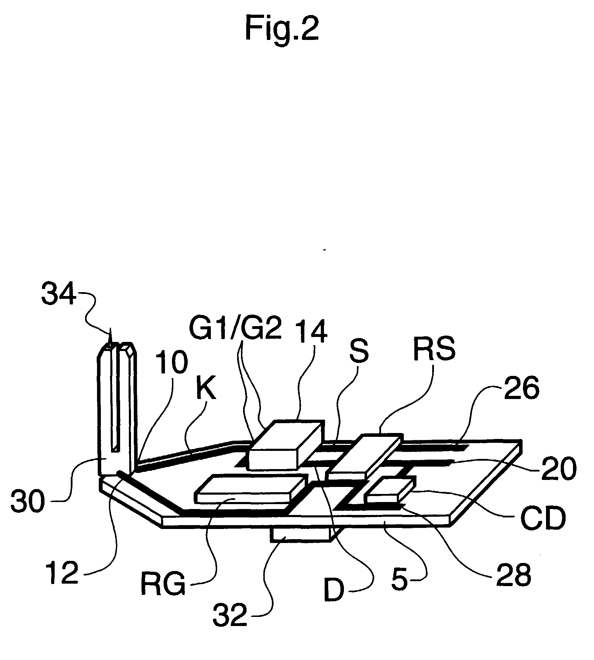

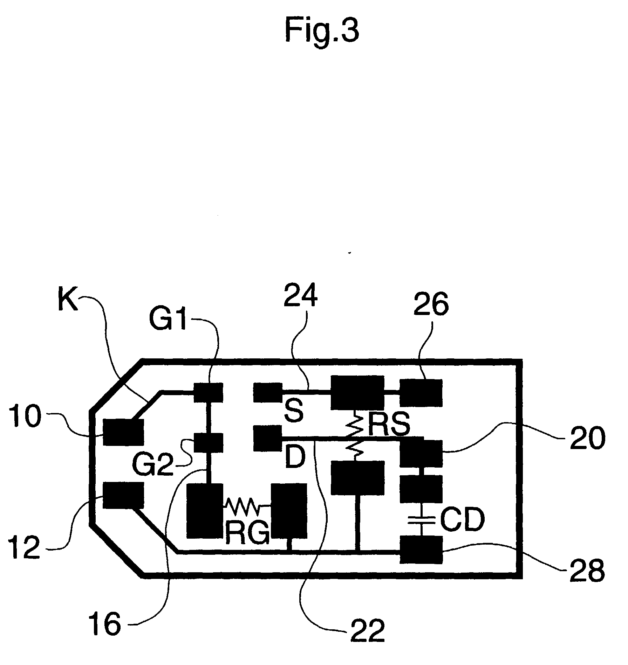

Figures 1 to 3 show details of an SPM head according to a first embodiment of the invention with Figure 1 being a circuit diagram, Figure 2 a schematic perspective view of the SPM head showing obliquely the underside of a populated circuit board bearing the circuit of Figure 1, and Figure 3 a plan view from underneath of the tracks on the circuit board of Figure 2.

Referring to Figure 1, two paired electrodes of a piezoelectric oscillator such as a tuning fork 30 (not shown in Figure 1) are connected to terminals 10 and 12, terminal 10 being connected in parallel to gates G1 and G2 of a dual-gate field effect transistor (FET) 14 via a short conductive path 16 and terminal 12 being connected to earth. In operation, the tuning fork 30 is vibrated on resonance and acts as a very small voltage source, supplying an AC signal of voltage Vin across the terminals 10 and 12.

A resistor RG having a resistance in the megaohm range is connected to the conductive path 16 on one side and on the other side to earth. The resistance of the resistor RG effectively defines the input impedance of the circuit since the gates G1 and G2 draw negligible current and the major part of the input voltage Vin drops across it. Resistor RG also serves to protect the FET 14 from damage and to filter out noise such as Brownian noise.

The drain D of the FET is held at a voltage VDD supplied to the circuit via a terminal 20 with a voltage of VDS dropping across the drain and source. The drain voltage input terminal 20 is connected to the drain D via conductive path 22 and also to earth via a capacitor CD. The capacitor CD serves to protect the FET from voltage spikes, for example when an external supply connected to terminal 20 is turned on or off.

The source S of the FET is connected by a conductive path 24 to a resistor RS having a resistance in the kiloohm range, the other side of which resistor RS is connected to earth. A voltage VS drops across the resistor VS where VDD=VDS+VS , it being understood that these voltages are principally static (DC) whereas the signal from the oscillator Vin is principally dynamic (AC). The source side of the resistor RS is connected via a conductive path to a terminal 26. A further terminal 28 connected to earth is provided. An output signal of voltage Vout is taken from the circuit is taken from across the terminals 26 and 28, where Vout is principally dynamic (AC) being the processed form of Vin which rides on a much larger static component equal to VS.

In one example of the circuit of Figure 1, referred to in the following as Example 1A, an ultra-high frequency (UHF) gallium arsenide metal-semiconductor FET (GaAs-MESFET) with the item code 3SK166 is used. This MESFET is manufactured by Sony and is an n-channel dual-gate MESFET with low noise characteristics. With reference to Figure 1, the dual gates G1 and G2 are connected in parallel to receive the input signal. The resistor RG has a resistance of 10 megaohm and the resistor RS has a resistance of 2.2 kiloohm. The capacitor CD has a capacitance of 47 nanofarrad.

A GaAs-MESFET has the advantage that the gate-source capacitance and the gate-drain capacitance are low, the former being generally around an order of magnitude larger than the latter. Moreover, the gate-source capacitance will generally be lower the shorter the gate length, so that a FET with short gate length is preferred. Typically the gate-source capacitance is around 1 to 50pF.

Although with a GaAs-MESFET $1/f$ noise can be considerable at lower frequencies, such noise by definition decreases as frequency increases, so that the use of tuning forks having a resonance frequency of at least 100kHz is preferred when a GaAs-MESFET is used. A GaAs-MESFET is also preferred for low temperature applications at cryogenic helium temperatures (i.e. around or below 4.2 Kelvin). A GaAs-MESFET is also suitable for room temperature applications, as is also a silicon junction FET (Si-JFET). Most kinds of silicon FETs, including Si-JFETs, are however unsuited for use below around 60 to 70 Kelvin due to carrier freeze-out. Some types of silicon complementary MOSFETs could however prove to be suitable at temperatures below 60 Kelvin. In any case, at room temperature, the noise characteristics of commercially available Si-JFETs are generally superior to those of GaAs-MESFETs, especially at lower frequencies. A Si-JFET should thus be considered for room temperature use, especially when a low frequency tuning fork, e.g. 33kHz, is used.

A second example of the first embodiment, referred to as Example 1B, thus has a Si-JFET with the item code 2N4416 manufactured by Siliconix. The circuit diagram is the same as that shown in Figure 1 except for the fact that, since this JFET only has one gate, one of the gate contact lines of Figure 1 is omitted. The resistor RS has a different resistance of 1.21 kiloohm. The other circuit components RG and CD are the same as for Example 1A.

Figure 2 is a schematic perspective view of an AFM implementation of an SPM head according to the first embodiment, showing obliquely the underside of a circuit board 5 bearing the circuit with the tracks, terminal pads and populated components of the circuit. The reverse side of the circuit board 5 (not visible) is metallized over its full area and tied to earth as a safeguard against earth loops and pick-up noise.

The circuit board 5 is generally rectangular in shape, but with two chamfered end faces at one end, and has dimensions of 0.625 inches long by 0.312 inches wide and 0.125 inches thick (16x8x3mm). The circuit board may be of a conventional printed circuit board material such as a glass-fibre epoxy. A ceramic circuit board, e.g. $Al_2O_3$ , can also be used and is advantageous, especially for AFM or STM applications, owing to its mechanical rigidity and temperature stability. Its higher dielectric constant would however tend to increase parasitic capacitance somewhat.

At the left side of Figure 2, a tuning fork 30 is shown, two interleaved electrodes of which (detail not shown) are soldered with bridging wires to the terminal pads 10 and 12. The tuning fork 30 has arranged thereon an AFM tip 34 extending from the end of one prong of the tuning fork 30, the tip being shown in highly exaggerated fashion in Figure 2. The tuning forks used in the testing have been commercially available quartz tuning forks with 33kHz and 100kHz resonance frequencies. Other tuning forks with frequencies of up to 540kHz are commercially available and could be employed.

Also shown in Figure 2 is a ceramic piezoelectric oscillator 32 mounted on the reverse side of the circuit board 5. In use, the oscillator 32 is electrically driven in forced oscillation to generate vibrations which are mechanically transmitted to the tuning fork 30 via the circuit board 5 to set the tuning fork into resonant oscillation. The positioning of the oscillator 32 is not critical, all that is required is an adequate path for the mechanical oscillations generated by the oscillator to reach the tuning fork 30. For example, mounting the oscillator 32 anywhere on either side of the circuit board 5 is satisfactory. An alternative way of setting the tuning fork into resonant oscillation is to use the tuning fork to excite itself, in which case a separate oscillator, such as the ceramic piezoelectric oscillator 32 used in the first embodiment, is not required. Self-oscillation of a tuning fork is described for example on pages 23 to 24 of GB-A-2289759. Self-oscillation can be advantageous when SPM heads comprising forks or other pizoelectric resonators of frequency greater than say 100kHz are used, when the Q-factor of the oscillator is very high such as is the case for low temperature operation or vacuum operation, when the medium in which the tip is to be scanned is of varying or unknown viscoscity, or when fast head scanning based on phase modulation such as with a phase-locked loop is desired.

Figure 3 shows to scale the circuit board 5 from the side visible in Figure 2 before population and thus with the tracks evident, various points being labelled with the reference numerals used in Figures 1 and 2 so that the correspondence between these figures can be readily appreciated. The circuit components RS, RG and CD are also sketched in Figure 3 for ease of comparson with Figure 1.

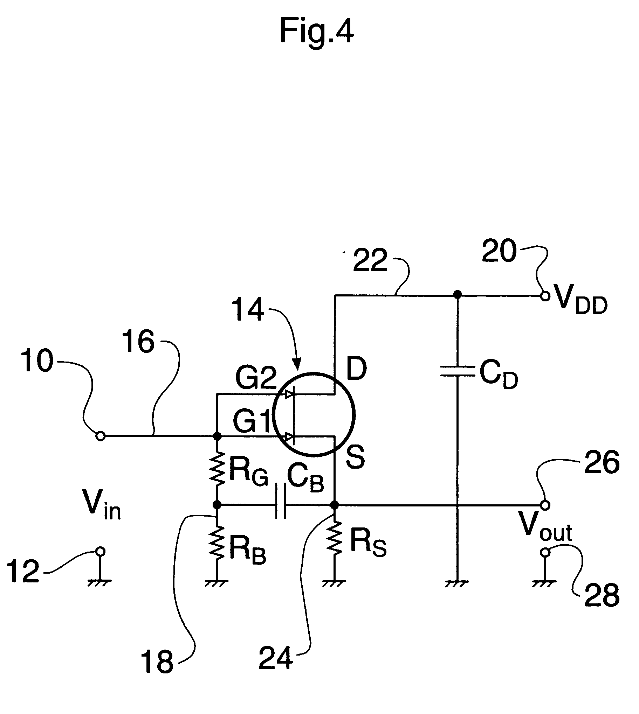

Figure 4 shows a circuit diagram of a second embodiment of the invention. The electrodes of a crystalline piezoelectric oscillator such as a tuning fork 30 (not shown in Figure 4) are connected to terminals 10 and 12, terminal 10 being connected in parallel to the dual gates G1 and G2 of a field effect transistor (FET) 14 via a short conductive path 16 and terminal 12 being connected to earth, as in the first embodiment.

A resistor RG having a resistance in the megaohm range is connected to the conductive path 16 on one side and on the other side via a further conductive path 18 to a further resistor RB having a resistance in the kiloohm range. The other side of the further resistor RB is earthed. Resistor RG also serves to protect the FET 14 from damage and to filter out noise such as Brownian noise.

The drain D of the FET is held at a voltage VDD supplied to the circuit via a terminal 20. The drain voltage input terminal 20 is connected to the drain D via conductive path 22 and also to earth via a capacitor CD.

The source S of the FET is connected by a conductive path 24 to a resistor RS having a resistance in the kiloohm range, the other side of which resistor RS is connected to earth. The source side of the resistor RS is connected via a conductive path to a terminal 26. A further terminal 28 connected to earth is provided. An output signal of voltage Vout is taken from the circuit is taken from across the terminals 26 and 28.

Capacitor CB links the source and gate sides of the circuit as a bootstrap capacitor to provide positive feedback and thus maximize the AC input impedance across the input terminals 10 an 12, noting that the bootstrap effect is frequency dependent owing to the high-pass filter formed by the bootstrap capacitor and resistor CB and RB.

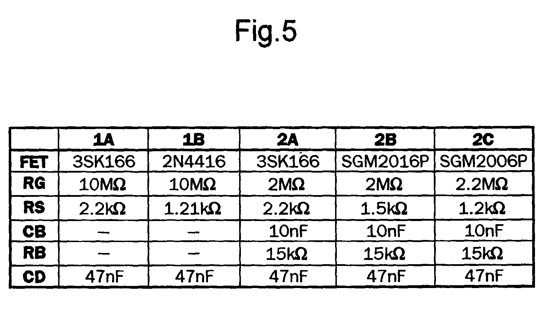

Figure 5 is a table showing the components used in the two examples 1A and 1B of the circuit of Figure 1 already discussed and the three examples of the the circuit of Figure 4, these further examples being labelled 2A to 2C. In example 2A, the same GaAs-MESFET as used in Example 1A is used, i.e. a Sony 3SK166. In Examples 2B and 2C, different UHF GaAs-MESFETs are used with item codes SGM2016P and SGM2006P respectively. These are also low-noise n-channel dual-gate MESFETs manufactured by Sony. It is also noted that the resistors are of the metal-layer type and the capacitors of the ceramic multi-layer type.

A general design goal of circuits embodying the invention is to achieve an input impedance which is as large as possible. Since a piezoelectric oscillator can be considered to a good approximation as purely capacitive, the capacitance of the oscillator thus forms a capacitive voltage divider with the input capacitance of the source-follower circuit, so that the design goal should be the minimisation of the input capacitance of the source-follower circuit. In addition, the input resistance of the circuit forms a high pass filter together with the voltage source capacitance and the cut-off must be chosen so that it does not damp the eigenfrequency of the voltage source (33 and 100kHz in the specific examples).

By reason of the above, the physical path 16 from the pick-up electrode on the piezoelectric oscillator to the gate or gates of the FET of the source-follower circuit should be kept as short as possible, since the parasitic capacitance of the connection line 16 can be expected to scale roughly proportionally with the the path length.

The fact that in the examples of the first and second embodiments both gates of the dual-gate transistors are connected up would appear to be contrary to this design principle, since it would appear to be beneficial to connect up only one of the gates. We have tried this, shorting the second gate G2 to the source, but the performance was inferior. This was owing to the fact that although the input capacitance of the circuit was decreased, the transconductance fell supraproportionally leading to a net worsening of performance.

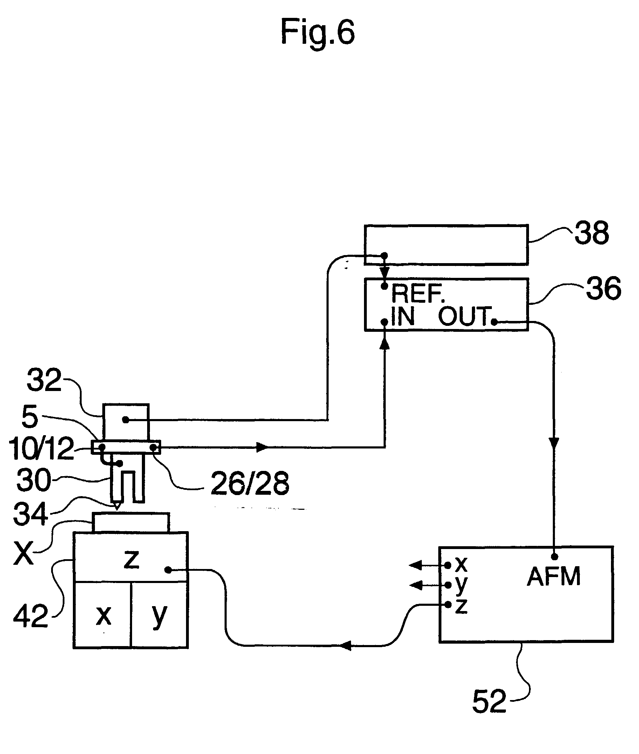

Figure 6 is a block diagram showing schematically an AFM having an SPM head according to the first, second or further embodiments. An SPM head having a tuning fork 30, circuit board 5 and oscillator 32 is shown. The tuning fork 30 is arranged such that its prongs extend substantially parallel to the axis of extension of the tip 34 so that when the tuning fork 30 is driven in resonance its prongs, and thus the AFM tip 34, will oscillate generally parallel to the plane of the sample X. The tip 34 is positioned by a three axis positioner 42 relative to a sample X, which positioner may include both coarse and fine positioners for one or more of the axes as is conventional in the art. The system control and the data collection, processing and display is coordinated by a computer 52. Also shown schematically are the electrical lines between the tuning fork 30, the circuit board 5 and the signal amplifier 36, for example a lock-in amplifier, and their associated inputs and outputs 10, 12, 26 and 28. The line supplying the drive signal to the oscillator 32, attached to the back of the circuit board 5, from a driver circuit 38 is also shown. The AFM tip 34 can for example be integrally formed with the tuning fork 30 on the end of one prong thereof. The AFM of Figure 6 has the advantage that there are no optical components, unlike in a conventional cantilever AFM which requires optical detection to detect the cantilever deflection. An AFM can thus be provided which is very simple and robust in its construction.

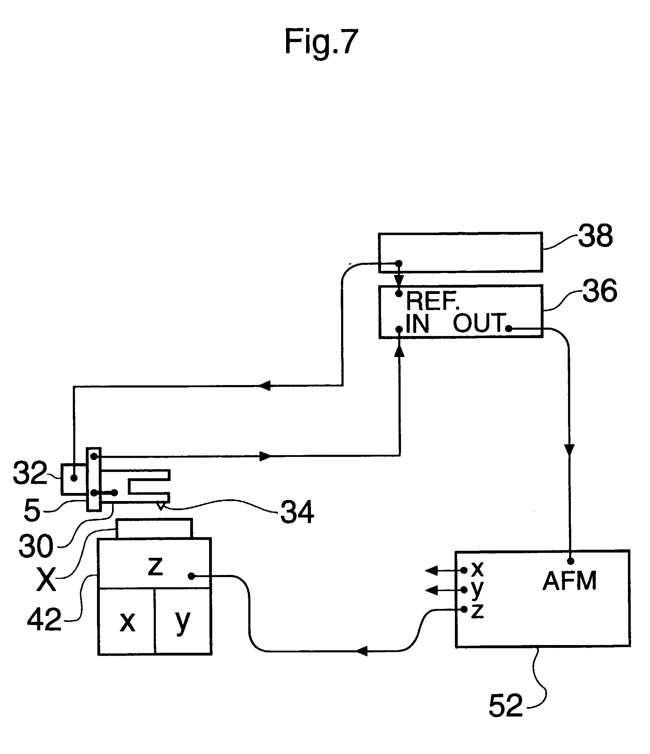

Figure 7 is a block diagram showing schematically another AFM having an SPM head according to the first, second or further embodiments. Reference numerals corresponding to those used in Figure 6 are used. The arrangement of Figure 7 is similar to that of Figure 6 except that the tuning fork 30 is arranged such that its prongs extend substantially perpendicular to the axis of extension of the tip 34 so that when the tuning fork 30 is driven in resonance its prongs, and thus also the AFM tip 34, will oscillate generally perpendicular to the plane of the sample X, i.e. generally in the z-direction. The tip is formed on an outer side of a prong of the tuning fork 30, for example integrally formed, so that the tip 34 extends towards the sample X. The comments made in relation to Figure 6 regarding the advantages in comparison to an optical cantilever AFM apply equally to the arrangement of Figure 7.

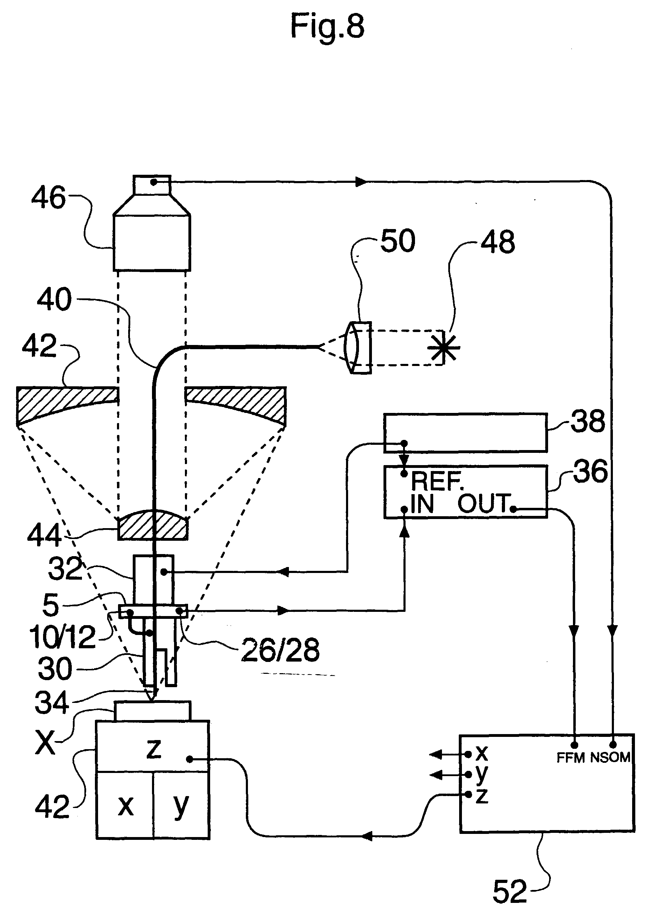

Figure 8 is a block diagram showing schematically an NSOM having an SPM head according to the first, second or further embodiments. The NSOM head can be seen as corresponding to the AFM head of Figure 6 in that the tuning fork 30 is arranged such that its prongs extend substantially parallel to the axis of extension of the tip 34 so that the NSOM tip 34 will oscillate generally parallel to the plane of the sample X. The tip 34 is the tapered, aluminium-coated end of a monomode optical fibre 40, a portion of which fibre 40 is held against one of the prongs of the tuning fork 30, for example by adhesive bonding, so that the fibre tip 34 follows the movement of the prong against which it is held. The NSOM head in this implementation is thus structurally the same as the AFM head shown in Figure 2 except in respect of the tip. The sample X is excited by light emitted from the tip 34. The excitation light is generated by a laser 48 and is coupled into the fibre 40 by a fibre coupler 50. The optical signal from the sample X is collected in reflection mode by a mirror arrangement made up of an apertured concave mirror 42 and a convex mirror 44 for forming the light collected by the concave mirror 42 into a collimated beam directed through the aperture of the concave mirror 42 and onto a photomultiplier 46.

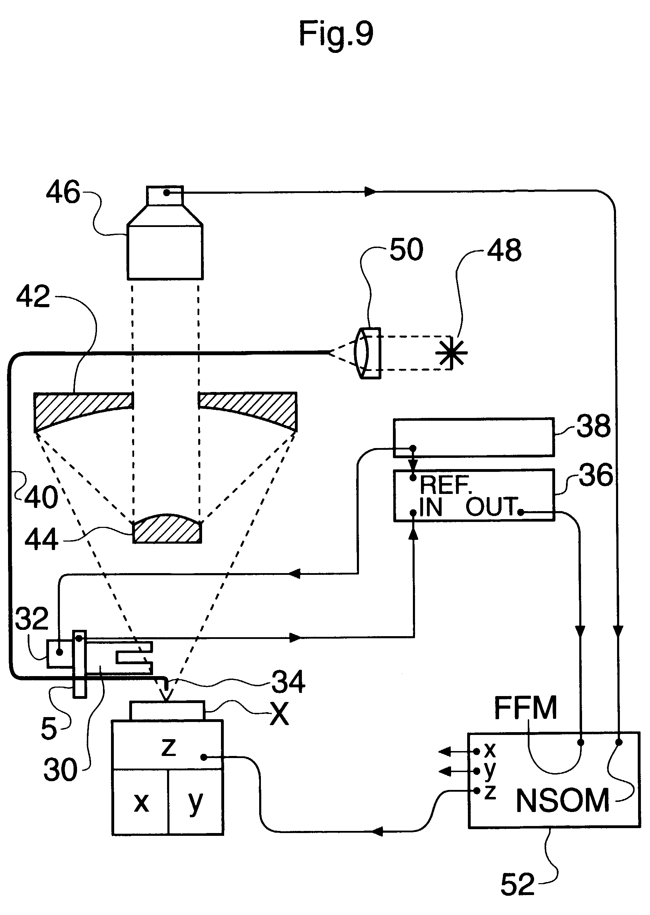

Figure 9 is a block diagram showing schematically another NSOM having an SPM head according to the first, second or further embodiments. The NSOM head can be considered to be corresponding to the AFM head of Figure 7 in that the tuning fork 30 is arranged such that its prongs extend substantially perpendicular to the axis of extension of the tip 34 so that the NSOM tip 34 will oscillate generally perpendicular to the plane of the sample X. The optical fibre 40 is held along one of the prongs of the tuning fork 30 as in the arrangement of Figure 8, but is bent at right angles prior to the tip portion 34. The NSOM arrangement of Figure 9 has the advantage that it is geometrically more similar to common cantilever AFM arrangements so that an NSOM head of this kind can be more convenient for fitment to an SPM designed for use primarily with cantilever AFM heads.

SPM heads according to embodiments of the invention may for example employ the circuits described herein, but in conjunction with resonant piezoelectric elements other than tuning forks for oscillating the tip. For example, a circuit according to any of the embodiments of the invention can be combined with an oscillating crystal SPM head according to US4851671, the electrodes numbered 5 and 6 in US4851671 being connected across the terminals 10 and 12 of the circuits of any of the embodiments described in the present specification. Crystalline piezoelectric oscillators of other shapes, for example hollow bars, are also commercially available and could be used. Such crystalline oscillators are most commonly made of single crystal quartz or silicon.

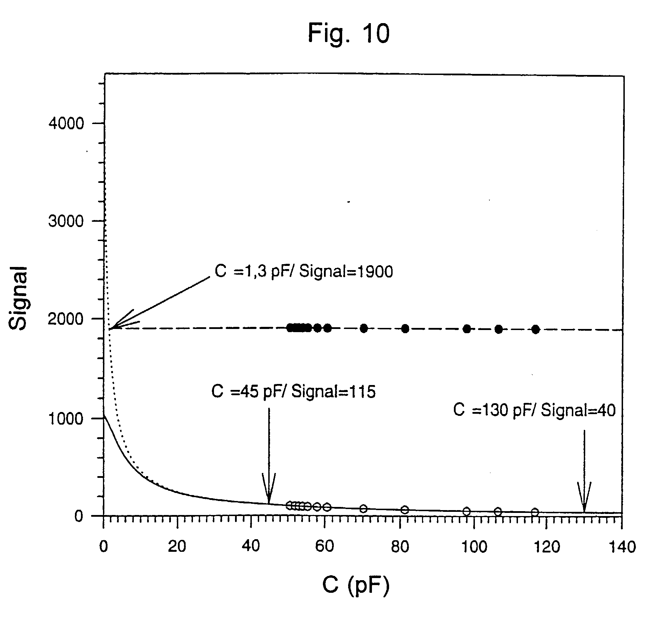

Figure 10 is a graph showing the results of an experiment conducted to compare the performance of an SPM head according to Example 1A of the first embodiment and a 33kHz tuning fork with the performance of an SPM head using the same tuning fork but without the circuit shown in Figure 1 in which the output signal is taken from the electrodes of the tuning fork to a cable and to the signal amplifier. In this experiment, to obtain the data points lying on the upper curve, capacitors of different capacitance in the range 50 to 300 picofarrad were connected across the output of an SPM head according to Example 1A of the first embodiment to simulate the parasitic capacitance associated with the coaxial cable which is, in typical use, connected between such an SPM head and a lock-in amplifier 36, such cable having an impedance of around 100 picofarrad per metre. Throughout the experiment, the tuning fork 30 was oscillated at 33kHz with a peak-to-peak value of output voltage Vout from the SPM head of around 100 microvolts by applying an electrical signal of appropriate magnitude to the ceramic oscillator 32.

As can be seen from Figure 10, the upper curve of the data points for Example 1A approximates very closely to a straight line at a constant signal level of around 1900 (arbitrary units). These results indicate that the signal level delivered by an SPM head according to Example 1A of the first embodiment to a lock-in signal amplifier will be unaffected by the lengths of coaxial cable typically used to interconnect them.

After collecting the data for the upper curve, the track 16 between the pick-up electrode of the tuning fork 30 and the gates of the FET 14 was severed with a scalpel at the position indicated with reference sign K in Figures 2 and 3. An output lead was then soldered onto the terminal pad 10 to take, what was previously the input signal Vin for the circuit of Figure 1, as the output signal Vout, thus bypassing the circuit of Figure 1.

The experiment was then repeated with the same set of capacitors of capacitance 50 to 300 picofarad to collect the data points lying on the lower curve of Figure 10.

As can be seen from Figure 10, there is an orders of magnitude difference between the signal levels delivered to the signal amplifier with and without the FET circuit of Figure 1, the difference becoming larger as the parasitic capacitance ("cable length") increases. The signal in arbitrary units is 115 and 40 with capacitances of 45pF and 130pF respectively, as compared with a signal of 1900 for the circuit of Example 1A irrespective of "cable length". The responsivities of SPMs having an SPM head connected to the external signal amplifier with a cable of 45pF and 130pF are 0.14 and 0.058 mV/nm respectively, as compared with a responsivity of 2.1 mV/nm for Example 1A. The prong deflections that enter into the responsivity values were obtained from calibration measurements performed with a Normanski interferometer and a conventional high-resolution optical microscope. These calibration measurements also show that prong deflection as a function of signal output from the tuning fork is linear over 5 or 6 orders of magnitude, the responsivity of the head being defined by the gradient of the function and being a measure of how much signal is delivered by the head for a given prong deflection.

The responsivity values can be considered in the light of the peak-to-peak deflections of interest for different SPM applications. For example, for an SPM in which atomic resolution is desired, the maximum allowable prong deflection needs to be between say 10 picometre and an Angstrom, under which conditions an SPM head according to Example 1A of the first embodiment would deliver a signal of 20 to 200 microvolts. Another example is an NSOM in which the maximum desired prong deflection should be less than say a quarter of the optical aperture diameter, i.e. less than 25nm for a typical optical aperture diameter of 100nm. This would translate into a signal of 50 millivolts for an SPM head according to Example 1A with a 33kHz tuning fork.

Alternatively, the responsivity values can be considered in the light of the force of the interaction between tip and sample that is detectable. In the case of the SPMs according to Figures 6 or 8, this force will be the shear force which needs to be induced by the oscillating tip on the sample under study to produce a topography image or a near-field optical image respectively, bearing in mind that the NSOM of Figure 8 relies on force detection for its tip-sample distance regulation. The shear force FS is proportional to the prong deflection x and is given by the equation $FS=(kx/Q\sqrt{3})(1-V/V0)$ where k is the spring constant or stiffness of the arm of the tuning fork to which the the tip is attached, Q is the quality factor of the tuning fork, V is the amplitude of the signal output from the SPM head in the presence of the regulated level of tip-sample interaction (i.e. during scanning) and V0 is the amplitude of the signal output from the SPM head in the presence of no tip-sample interaction (i.e. with the tip well away from the sample). When interpreting the above equation, it should be borne in mind that the most usual scanning mode will be scanning to maintain V constant. With the embodiments of the invention it is possible to construct an FFM or NSOM according to Figures 6 and 8 respectively in which V is maintained constant during scanning at a level which results in the exertion of a shear force on the sample of only 1 to 10 piconewton. The theoretical lower limit for a tuning fork arrangement is given by the Boltzann noise and is around 1/3 piconewton for a stiffness k=23600 and a temperature T=4.2K, corresponding to a displacement of around 50 femtometres.

The ability with the embodiments of the invention to reduce the force exerted on the sample during scanning is of major practical significance for imaging soft samples such as biological tissue or liquid crystals. For example, it is considered that a force of around 20 piconewton is sufficient to tear bonds in a DNA molecule.

By the same token, the reduction in interaction force also results in a reduced force acting on the tip, which thus reduces the possibility of damaging the tip. Measurements of one of the inventors have demonstrated that with an NSOM of the kind shown in Figure 8, a force of 2 nanonewton is sufficient to destroy the optical integrity of the tip aperture and a force of 40 nanonewton completely destroys the tip itself. It is possible with embodiments of the invention to scan with forces well below 2 nanonewton so that tip damage can be avoided. For example with a head according to Example 1A in an NSOM as shown in Figure 8, using a tuning fork with Q=400 and k=23600, oscillating the tuning fork to generate a usable output signal of Vout=100 microvolt and setting V/V0=0.7, the shear force of the interaction is only 0.5 nanonewton. Here it is noted that this NSOM example allows regulation to be set at between V/V0=0.6 to 0.9 corresponding to a tip-sample distance of around 10 to 20 nanometre

By comparison, with an SPM head in which the signal is taken directly from the tuning fork, the measured responsivity is typically around 100 times less and the minimum achievable interaction force is thus 100 times greater.

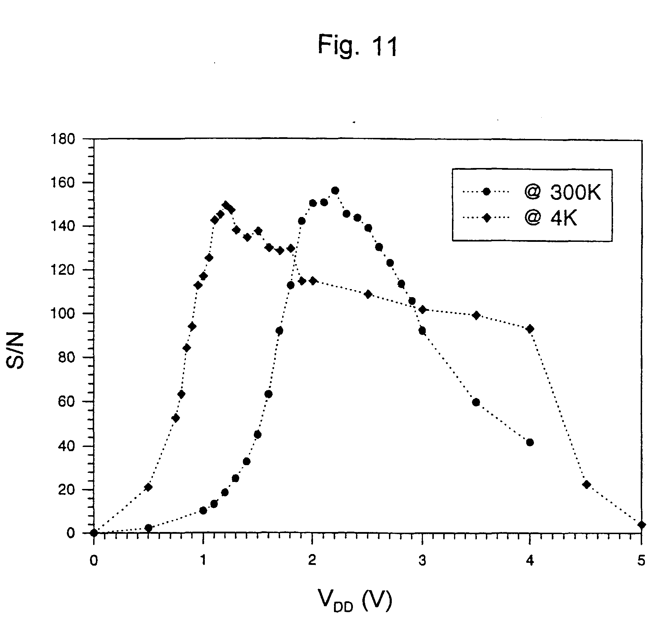

Figure 11 shows the signal-to-noise ratio at 4.2K and 300K of the output signal Vout as a function of bias (drain-earth) voltage VDD for an NSOM head of the kind shown in Figure 8 having a circuit according to Example 1A and a 33kHz tuning fork. The values were taken with Vin = 100 microvolts. At both temperatures, there is a range of bias voltages VDD which give higher S/N ratios. At 4.2K the range of high S/N ratios is between about 1 and 4 volts with a peak at 1.2 volts and a fairly level plateau at intermediate values within the range. At 300K the range of high S/N ratios is between about 1.7 and 3 volts with a pronounced peak at around 2 to 2.3 volts and a gradual fall off to higher voltages.

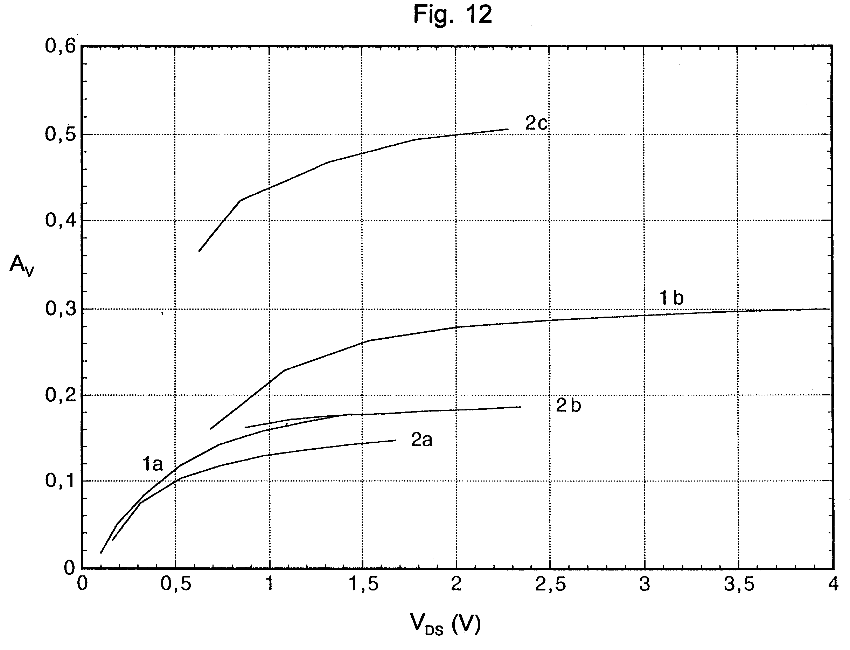

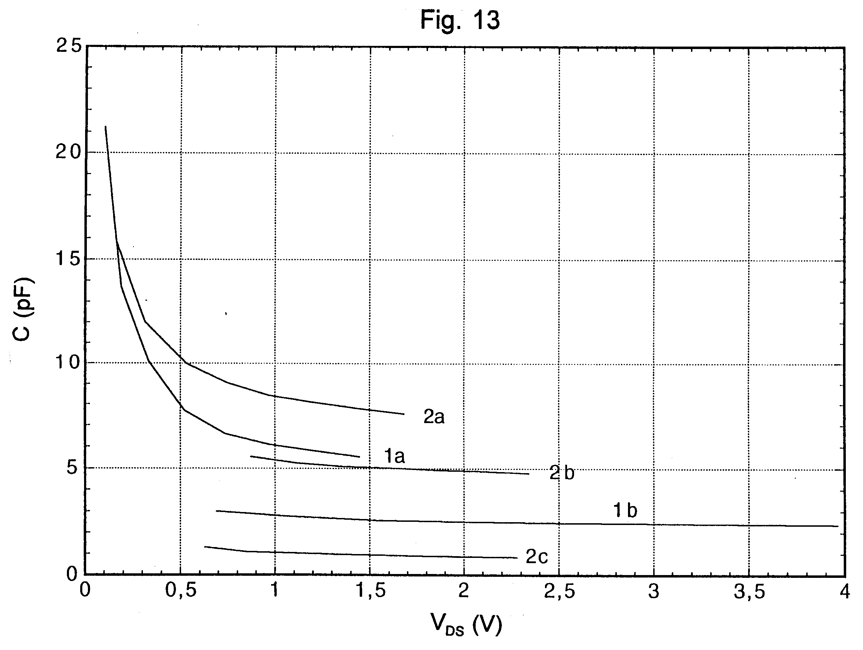

The underlying reasons for the behaviour shown in Figure 11 can be understood from Figures 12 to 15 which show characteristic curves for the circuit of Example 1A at 33kHz. Figures 12 to 15 also show characteristic curves of the other four examples of Figure 5 with 33kHz and 100kHz forks. The data for the JFET example 1B was measured at 300 Kelvin and that for the MESFET examples at 4.2 Kelvin. Equivalent measurements have however been made at 4.2K for Example 1A with a 33kHz tuning fork and the results (not shown) indicate no major change in the overall voltage gain characteristics. The principal noteworthy difference is the change in the optimum range of values for the bias voltage VDD, as already discussed above with reference to Figure 11. The circuits of Examples 1B and 2B were tested at both 33kHz and 100kHz, the circuits of Examples 1A and 2A were tested only at 100kHz and the circuit of Example 2C only at 33kHz. Figures 12, 14 and 15 show measured data, whereas Figure 13 is calculated from measured data and component parameters. The measurements were taken with AC input voltages from the tuning forks in the range 100 to 300 microvolts.

The basic behaviour of the rising edge of the signal-to-noise ratio (S/N) in Figure 11 can now be understood with reference to Figures 12 and 13 which show that the FETs do not operate efficiently until VDD rises above approximately 1 volt, having poor gain (Figure 12) and high input capacitances (Figure 13) at lower voltages.

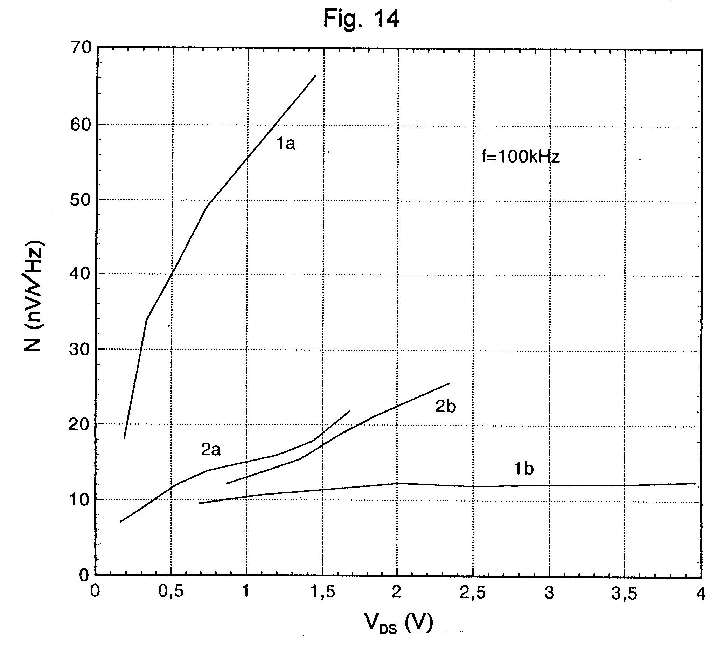

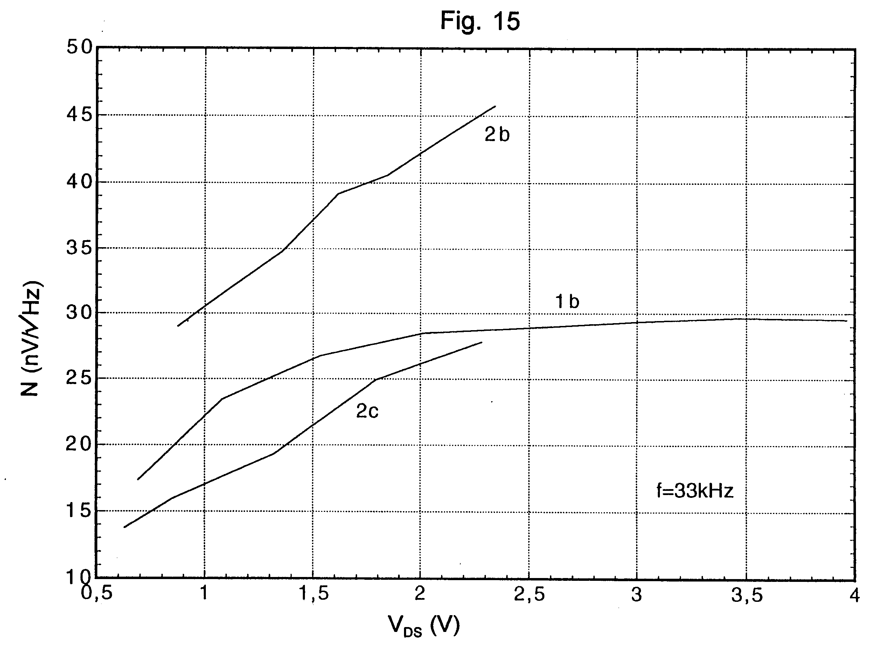

The basic behaviour of the falling part of the signal-to-noise ratio can be understood with reference to Figures 14 and 15 which show, for all the GaAs-MESFET examples (but not the JFET Example 1B), an increase in noise as bias voltage VDD increases.

It is thus expected that all the GaAs-MESFET examples will have signal-to-noise ratio characteristics having the same form as Figure 11, but with different ranges for different circuit variations, oscillator frequencies and temperatures.

It is noted that Figures 10 and 11 relate to Example 1A of the first embodiment with a 33kHz tuning fork. This was the first SPM head embodying the invention constructed and, as a result, has been the most extensively tested to date. However, the overall performance of the other examples, as shown in Figures 12 to 15, can be considered to be better. The examples of the second embodiment having a bootstrap are considered to be an improvement over the first embodiment. As Example 2A uses the same FET as Example 1A, a fair comparison can be drawn between first and second embodiments in this case and it can be seen from Figure 14 that the noise characteristics for the bootstrapped circuit 2A are superior.

The general improvement of noise characteristics with increasing oscillator frequency is evident from a comparison of the two Examples 1B and 2B that were tested at two frequencies, with reference to Figure 14 (100kHz) and Figure 15 (33kHz).

Although the signal-to-noise ratio is poor for VDD>5V, the specification sheet of the FET 3SK166 used in Examples 1A and 2A in fact specifies drain-source voltages VDS of 8 and 12 volts respectively! It is thus surprising that the noise characteristics in the tested circuits are so bad at the bias voltages which should provide for "normal" operation.

Moreover, the input capacitance of the FET 3SK166, used in Examples 1A and 2A, is specified to have a typical value of 1.3 pF at VDD=5V and ID=10mA and the input capacitance of the 33kHz and 100kHz tuning forks to be only 1.46pF and 1.2pF respectively. However, the results shown in Figure 13 indicate that the input capacitance of the circuits is much larger than specified in the FET data sheets. The results thus show that the specification sheets issued by the manufacturer do not provide even a general guide to the performance of the FET concerned under the abnormal conditions in which they are used here with low drain-source voltages and correspondingly low drain currents, and with a signal source connected to the gate which has a very low, almost purely capacitive impedance in the picofarrad range.

To confirm that the circuits built were not faulty and that their strange operating characteristics and optimum operating values were not artefacts, the circuits of all five examples were remeasured but with a capacitance of 1.0 nanofarrad i.e. with an input capacitance of the order of one-thousand times larger than that of a quartz tuning fork. The plot of these results (not shown) of voltage gain versus drain-source voltage, i.e. the equivalent plot to Fig. 12, shows gain curves which, for all five examples, rise to saturate at values of between 0.75 and 0.9 by a value of drain-source voltage VDD of about 1V. These results thus confirm that the very low input capacitance of the piezoelectric voltage source, as represented for example by a tuning fork, has a major effect on circuit design and performance.

The fact that the circuits are operating on their limits as far as their performance as source-follower circuits are concerned is evident from a comparison of the gain characteristics of Figures 12 with the input capacitance characteristics of Figure 13. The gain ($AV=Vout/Vin$) is strongly correlated with the input impedance of the circuit, which as mentioned is dominated by the input impedance of the FET, and peaks at only approximately 0.5 for Example 2C and less than 0.2 for Examples 1A, 2A and 2B, as is shown in Figure 12. The source-follower circuits are thus reducing the signal voltage by between 2 and 5 times.

However, despite this reduction the circuits provide a beneficial effect, since the output impedance of the SPM head of the examples is only of the order of a hundred ohms, instead of a megaohm in the case of an SPM head which delivers its output directly from a tuning fork. Consequently, voltage losses in a cable used to connect the SPM head to the signal amplifier are negligible, so that cable length is no longer a significant consideration, thus eliminating a design constraint of considerable practical importance. For example, performance will not change appreciably whether the signal amplifier is connected as directly as possible to the SPM, is connected by a 20 centimetre cable or is connected by a 10 metre cable.

By comparison, the voltage gain AV of an SPM head in which the output signal is taken directly from a tuning fork, as in the lower curve of Figure 10, is expressed by $AV=CS/(CS+CC)$ where CS is the capacitance of the tuning fork and CC the capacitance of the cable used to connect the SPM head to the signal amplifier. Since CS, the output impedance of such an SPM head, is approximately one picofarrad (i.e. around a megaohm at 100kHz) and cable capacitance is around 100 picofarrad per metre voltage, voltage gain will be dependent on cable length, having a value of around only 0.01 for a typical cable length of one metre.

The difference between the upper and lower curves of Figure 10 can thus be appreciated having regard to the output impedance of a piezoelectric element, for example a tuning fork, as compared with the output impedance of a circuit according to any of the embodiments.

**Claims**

1.  A head for a scanning probe microscope, the head comprising a tip (34) for interacting with a sample and a piezoelectric element (30) connected to the tip, the piezoelectric element (30) having an electrode (10) for picking up an AC electrical signal generated by oscillation of the piezoelectric element (30) and influenced by external forces acting on the tip (34), **characterised in that** the head includes a circuit for receiving the signal from the pick-up electrode (10) of the piezoelectric element as input, processing the input signal (Vin) and delivering it from the head as an output signal (Vout) for an external signal amplifier, the circuit comprising a field effect transistor (14) arranged in the circuit in a source-follower configuration a gate (G) of which field effect transistor is connected to the pick-up electrode (10) to receive the input signal (Vin).

2. A head according to claim 1, wherein said electrode (10) is one of a pair of pick-up electrodes (10, 12) of the piezoelectric element (30), the other electrode (12) of said pair being connected to earth.

3. A head according to claim 2, wherein the piezoelectric element (30) has an output impedance of greater than one megaohm, as measured across its pair of pick-up electrodes (10, 12).

4. A head according to claim 2 or 3, wherein said gate (G) of the transistor (14) is connected by a first conductive path (16) to the first-mentioned one of the pick-up electrodes (10) and by a first resistive path (RG) to earth, the drain (D) of the transistor (14) is connected by a second conductive path (22) to an input (20) for receiving a bias voltage (VDD) for the transistor (14), and the source (S) of the transistor (14) is connected by a second resistive path (RS) to earth and by a third conductive path to an output (26) for delivering said output signal, wherein the first resistive path (RG) preferably has a resistance of at least one megaohms and/or the second resistive path (RS) preferably has a resistance of at least five hundred ohms.

5. A head according to claim 3 or 4, wherein the drain (D) is connected by a first capacitive path (CD) to earth, the first capacitive path (CD) preferably having a capacitance of at least ten nanofarrads.

6. A head according to any one of claims 3 to 5, wherein the source (S) and the first resistive path are connected by a second capacitive path (CB), the first resistive path thus being subdivided into a gate-side section (RG) and an earth-side section (RB) in a bootstrapped configuration, the second capacitive path (CB) preferably having a capacitance of at least one nanofarrad.

7. A head according to claim 6, wherein the resistance of the gate-side section (RG) of the first resistive path is at least ten times that of the earth-side section (RB).

8. A head according to claim 6 or 7, wherein the resistance of the earth-side section (RB) of the first resistive path is at least twice that of the second resistive path (RS).

9. A head according to any one of the preceding claims, wherein the piezoelectric element (30) comprises at least two piezoelectric parts which can be oscillated together as a coupled oscillator, the piezoelectric element preferably being a tuning fork.

10. A scanning probe microscope having a head according to any one of the preceding claims.

11. A microscope according to claim 10 and comprising a signal amplifier (36) and a cable interconnecting the signal amplifier and the scanning probe microscope head, the cable having an impedance which is preferably greater than at least one of 10, 50, 100, 200 and 500 picofarrads.

# Fig.1

# Fig.2

# Fig.3

# Fig.4

# Fig.5

| | 1A | 1B | 2A | 2B | 2C |
|---|---|---|---|---|---|
| **FET** | 3SK166 | 2N4416 | 3SK166 | SGM2016P | SGM2006P |
| **RG** | 10MΩ | 10MΩ | 2MΩ | 2MΩ | 2.2MΩ |
| **RS** | 2.2kΩ | 1.21kΩ | 2.2kΩ | 1.5kΩ | 1.2kΩ |
| **CB** | — | — | 10nF | 10nF | 10nF |
| **RB** | — | — | 15kΩ | 15kΩ | 15kΩ |
| **CD** | 47nF | 47nF | 47nF | 47nF | 47nF |

# Fig.6

# Fig.7

# Fig.8

# Fig.9

## Fig. 10

## Fig. 11

EP 0 864 846 A2

## Fig. 12

Fig. 13

EP 0 864 846 A2

# Fig. 14

# Fig. 15

EP 0 864 846 A2